Europäisches Patentamt

European Patent Office

Office européen des brevets

(11) Publication number: **0 471 086 A1**

# EUROPEAN PATENT APPLICATION
## published in accordance with Art. 158(3) EPC

(21) Application number: 91904806.6

(22) Date of filing: 28.02.91

(86) International application number:
PCT/JP91/00264

(87) International publication number:
WO 91/12918 (05.09.91 91/21)

(51) Int. Cl.⁵: **B23H 3/00**

(30) Priority: **01.03.90 JP 50686/90**

(43) Date of publication of application:
**19.02.92 Bulletin 92/08**

(84) Designated Contracting States:
**CH DE FR GB IT LI**

(71) Applicant: **SHIZUOKA SEIKI CO. LTD.**
**4-1 Yamanacho**
**Hukuroi-shi, Shizuoka 437(JP)**

(72) Inventor: **KUWABARA, Youhei**
**1180-1, Takao**
**Hukuroi-shi, Shizuoka 437(JP)**

(74) Representative: **BATCHELLOR, KIRK & CO.**
**2 Pear Tree Court Farringdon Road**
**London EC1R 0DS(GB)**

(54) **ELECTROLYTIC FINISHING METHOD.**

(57) An electrode is moved on a horizontal plane on the basis of an inputted set value and brought close to the surface to be worked of a work. After executing electrolytic machining with a high-density pulse current fed between the work and the electrode, electrolytic products generated between the work and the electrode are removed. Electrolytic finishing work is performed by repeating these processes.

FIG. 1

## TECHNICAL FIELD

The present invention relates to a method for finishing a surface of a work by electrolytic machining, and more particularly to a method for finishing the surface to a product having a lustrous surface with accuracy.

Japanese Patent Application Laid Open 1-252317 disclose an electrolytic finishing method. The method comprises positioning an electrode and a work to form a predetermined gap between the electrode surface and a surface of a work, moving the electrode to contact with the work, and detecting the contact position, raising the electrode to a predetermined position after detecting the contact position and storing the position as an upper limit position, supplying electrolyte to an electrolyte tank so as to submerge the electrode and the work, applying machining pulses to the electrode when the electrolyte in the gap becomes stationary, raising the electrode to the upper limit position after the supply of the pulse, re-supplying the clean electrolyte to the electrolyte tank for discharging the electrolyte including residual products, and lowering the electrode to provide the predetermined gap.

The finishing method is employed with the electrode which was used at the electron discharge machining (pre-machining) for roughly machining the work. In the electron discharge machining, since spark generates where the electrode and the work are at the closest distance, the surface of the electrode becomes rough. The largest difference between the peak and the valley of the roughness is about several tens $\mu$m. If the roughness exceeds 20 $\mu$m and a waving pitch of the roughness is smaller than 0.1 mm, and the gap between the electrode and the work is about 0.1 mm, the surface of the work is finished to be flat in dependency on the equipotential surface of the electrode without the influence of the rough surface of the electrode. However, if the waving pitch exceeds 0.3 mm, the rough surface of the electrode is transferred to the surface of the work about one-third thereof even if the gap is about 0.1 mm.

Japanese Patent Publication 59-12412 (a), Japanese Patent Applications Laid Open 54-1495 (b) and 53-88296 (c) disclose electron discharge machining methods for solving the above mentioned disadvantage. In the methods, the electrode and the work are relatively moved, thereby providing a smooth surface of the work.

In the conventional method (a), the electrode is eccentrically moved or swung about the work. Thus, it is necessary to exchange the polarities of the electrode and the work. In the electrolytic machining, only the positive pole is machined, the electrode made of metal can not be used. Therefore, the method (a) can not be applied to the electrolytic machining.

In the conventional method (b), the electrode and the work are moved relatively along an arc line. The specification describes that stepwise movement is improper. However, in the method, the pulse current is applied so that it is indefinite how to infinitely machine.

In the method (c), the electrode and the work are faced to each other and vibrated or reciprocated relatively. The reciprocating stroke is determined between 0.1 and 1 mm.

However, it was found that those conventional methods have no effect on the electrolytic machining.

The electron discharge machining is performed in an insulation liquid, and the gap between the electrode and the work becomes small at the projected portions. Thus, the current is concentrated at the projected portions to generate spark at the portions so that projected portions on the surface are melted to reduce the height of each projection without influence on the other portions of the surface, thereby reducing the roughness of the surface.

To the contrary, the electrolytic machining is performed in the conductive electrolyte. When the pulse current is applied to the electrode, the whole surface of the work is melted inversely proportional to the distance of the gap. It was found that if the pitch of the roughness is equal to the stroke of the vibration or the reciprocation, the roughness of the surface is not reduced.

An object of the present invention is to provide an electrolytic finishing method in which an electrode having a rough surface is effectively used.

## DISCLOSURE OF THE INVENTION

The present invention is characterized by comprising the steps of moving an electrode in a vertical direction and in a horizontal plane based on an input set value, positioning the electrode to form a predetermined gap between the electrode and the surface of the work, supplying electrolyte to an electrolyte tank so as to submerge the electrode and the work, applying pulses having a high peak current density to the electrode for performing the electrolytic machining, supplying clean electrolyte to the gap and discharging the electrolyte including residual products, repeating the machining cycle.

## BRIEF DESCRIPTION OF THE DRAWINGS

Fig. 1 is a schematic illustration showing a system of an electrolytic finishing machine according to the present invention;

Fig. 2 is a block diagram showing a control unit of the system;

Fig. 3a is a schematic perspective view showing the surface of the work;

Figs. 3b, 3c and 3d are sectional views showing the position of the electrode in relation to the work;

Fig. 4a is a schematic illustration showing the surface of the electrode used at the electron discharge machining;

Fig. 4b is a schematic illustration showing the surface of the work by electron discharge machining;

Fig. 4c is a schematic illustration showing the surface of the work in which the electrolytic machining is performed by 100 $\mu$m; and

Fig. 4d is a schematic illustration showing the finished surface of the work according to the present invention.

BEST MODE FOR EMBODYING THE INVENTION

An embodiment of the present invention is hereinafter specifically described in detail.

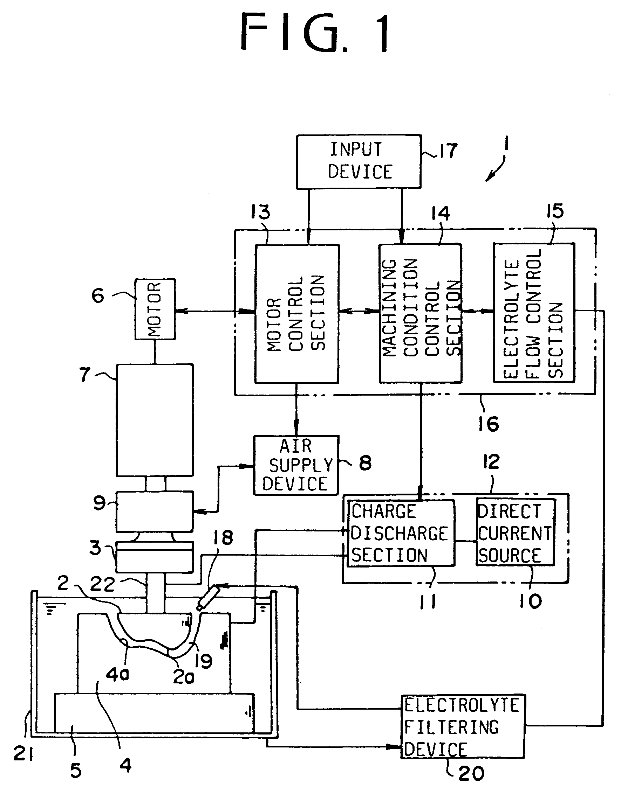

Fig. 1 shows an electrolytic finishing machine 1 for embodying the present invention. Referring to Fig. 1, the electrolytic finishing machine 1 has an electrode holding device 3 for holding an electrode 2, a work fixing device 5 for fixing a work 4, an electrode driving direction converter 7 arranged to change a rotary output of a pulse motor 6 into axial movement, a pick unit 9 vertically reciprocating the electrode holding device 3 in accordance with air supplied from an air supply device 8, a source device 12 which generates a machining pulse, a control unit 16 comprising a motor control section 13, a machining condition control section 14 and an electrolyte flow control section 15, an input device 17 for inputting various machining conditions of the work 4, an electrolyte filtering device 20 for filtering out residual products in electrolyte and for feeding the electrolyte through a nozzle 18 during the machining so as to remove residual products in a gap 19 formed between the electrode 2 and the work 4, and a tank 21.

The electrode 2 made of copper or graphite is secured to the lower end of the rod 22 of the electrode holding device 3 so as to form the predetermined gap 19 between an electrode surface 2a and a work surface 4a at an equal three-dimensional distance there-between. The holding device 3 is operatively connected to the pulse motor 6 through the converter 7. The motor 6 is operated by a control signal from the motor control section 13. The converter 7 is arranged to change rotary output of the motor 6 into axial movement of the rod so that the device 3 is vertically moved. The air supply device 8 is operated by the control signal from the motor control section 13 for supplying the air to the pick unit 9 so that the holding device 3 is vertically moved by the pick unit 9. The holding device 3 is operated by either of the motor 6 and the air supply device 8, or by both of them in dependency on the machining conditions.

The work fixing device 5 is a table made of insulation such as granite and ceramic material on which the work 4 is fixed through a setting jig (not shown).

The holding device 3, the motor 6 and the converter 7 are mounted on a table (not shown) through a pair of X-Y tables which are piled one on another. The X-Y tables are driven in accordance with an X-axis motor and a Y-axis motor (not shown) which are operated by the signals from the motor control section 13. Thus, the work 4 can be moved in X and Y directions, namely on the horizontal plane.

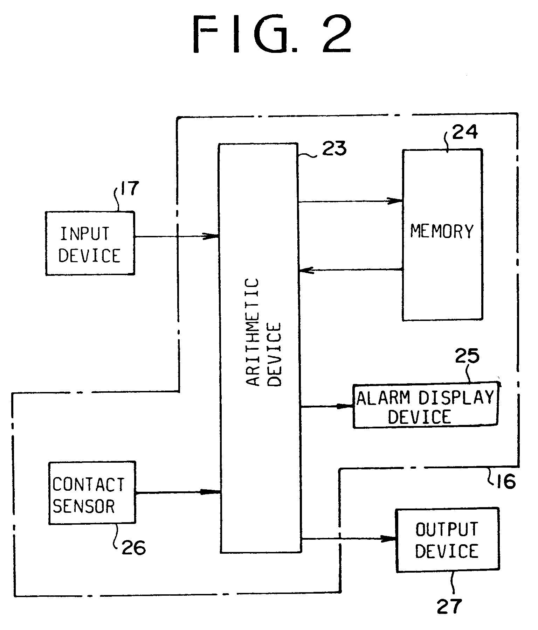

Referring to Fig. 2 showing an electronic system of the control unit 16, an arithmetic device 23 is applied with a data signal from the input device 17 and an output signal from a contact sensor 26. A memory 24 stores the data applied from the arithmetic device 23. An alarm display device 24 displays the data applied from the device 23. In accordance with the control program and the signal from the contact sensor 26, the arithmetic device 23 reads the data stored in the memory 24 and processes the data, and produces control signals for controlling the motors, the air supply device 8 and the filtering device 20 through an output device 27.

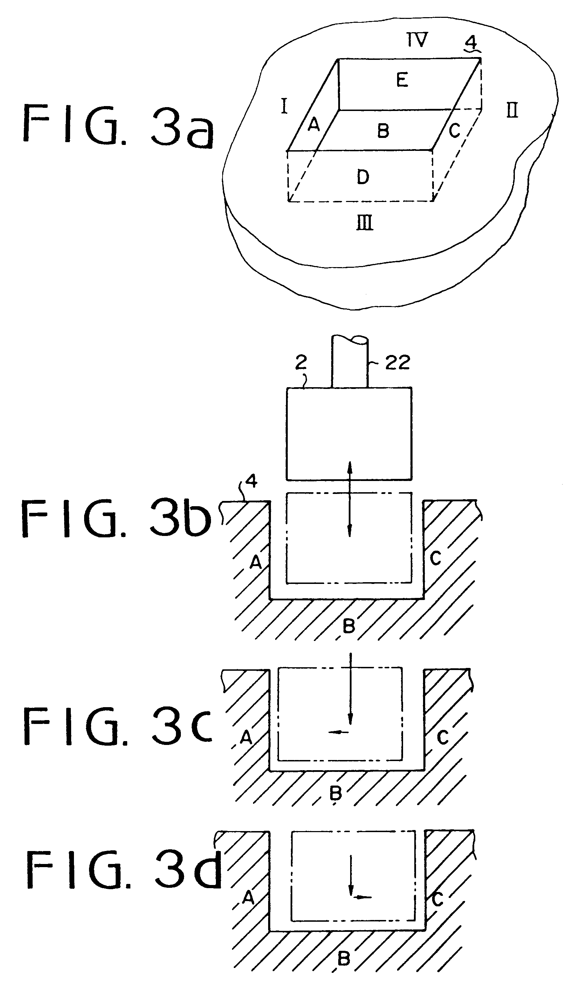

The machining method of the work of the machine 1 is described hereinafter with reference to Fig. 3.

The electrode 2 which was used at electron discharge machining for diesinking the work 4 is attached to the rod 22 of the holding device 3 and the work 4 is attached to the fixing device 5. A power button is depressed to supply the power and the centering of the electrode 2 and the work 4 is performed.

The centering is operated as follows. If an automatic operation starts, the electrode 2 is lowered into a recess formed in the work by the pulse motor 6 to contact with the bottom of the recess of the work 4, and the position of the electrode 2 is detected at the contact sensor 26 and stored in the memory 24 as a machining original position of the Z-axis direction. Then, the electrode 2 is raised from the machining original position (Z-axis) and moved in the (+) X-axis direction. When the electrode 2 contacts with one of inside walls of the recess, the contact is detected at the sensor and stored in the memory. The electrode 2 is reversely moved in the (-) X-axis direction and the contact of the electrode 2 with the work 4 is detected and stored. The moving distance of the electrode is calculated to determined the middle position of the moving distance as an original position of the X-axis direction. Thus, the centering in the X-axis direction is completed.

The centering in the Y-axis direction is performed in the same manner as the X-axis.

The electrolyte is supplied to the tank 21 by a pump (not shown) in the filtering device 20. When the level of the electrolyte reaches a predetermined level, a float switch (not shown) provided on the wall of the tank 21 turns on to produce a level detecting signal which is applied to the arithmetic device 23 through the input device 17. The arithmetic device 23 is adapted to stop the automatic operation of the machine when the level detecting signal is applied, or when the operator pushes a stop button of the input device 17 and a stop signal is applied. The machine can be manually operated. Thus, by depressing a dither operation key, the electrode 2 is raised to a predetermined set position for expanding the gap 19 so that the electrolyte is sufficiently injected in the gap.

When a restart button (not shown) is depressed by the operator, the machine starts machining in the automatic operation. The arithmetic device 23 of the control unit operates to store the position of the electrode 2, namely the upper limit position thereof. The electrode 2 is automatically lowered to provide the predetermined gap set by the input device 17. When it is determined that the electrolyte in the tank 21 is a predetermined level and the electrolyte in the gap becomes stationary, the electrolytic machining is started. A predetermined single pulse current (for example, peak current density between 5 and 70 A/cm$^2$) for improving the surface roughness is applied between the electrode 2 and the work 4 corresponding to the area of the work surface 4a to be machined.

If it is determined that the level of the electrolyte is higher than the predetermined level at the start of the machining, the electrode 2 is raised to perform the cleaning of the electrolyte. The clean electrolyte is supplied to the gap 19 to discharge the residual products from the gap.

After the pulse is supplied, the electrode 2 is raised to the upper limit position and clean electrolyte is injected through the nozzle 18 to the gap 19 at the same time, thereby removing the residual products from the gap 19. After the discharge of the electrolyte, the electrode 2 is lowered. Thus, a predetermined time of machining cycles is performed in dependency on the data from the input device 17. The arithmetic device 23 produces control signals for driving the pulse motor 6 and the air supply device 8 until the predetermined machining cycle which is previously input by the input device 17 is performed.

The vertical movement of the electrode 2 is operated in accordance with the pulse motor 6 and the air supply device 8. When the motor 6 is normally rotated or when the air supply device 8 supplies the air to the pick unit 9, the electrode 2 is raised. When the motor 6 is reversely rotated or when the air of the pick unit 9 is drained, the electrode 2 is lowered.

The electrode 2 is reciprocated in the vertical direction (Z-axis) on the original positions of the X-axis and the Y-axis. If the electrode surface 2a is rough, the rough surface may be transferred to the work surface 4a.

Consequently, in the present invention, the position of the electrode 2 is controlled as shown in Fig. 3.

The electrode 2 is lowered to the original position and moved in the direction (X-Y plane) perpendicular to the Z-axis, for example, in the (+) X-axis direction close to the inside surface A of the recess of the work 4 and the pulse current is supplied for performing the machining. Then, the electrode 2 is raised and the electrolyte is injected to the gap. Thereafter, the electrode 2 is lowered again to the original position and moved in the (-) X-axis direction close to the surface C of the work 4. The pulse current is supplied again. Namely, the electrode 2 is controlled as follows.

(1) Setting the electrode 2 on the predetermined upper limit position → lowering in the Z-axis direction to provide the gap 19 → moving in the (+) X-axis direction by the calculated moving distance → supplying the pulse current → moving in the (-) X-axis direction by the calculated moving distance → raising to the upper limit position → supplying the electrolyte to the gap to remove the residual products →

(2) Lowering the electrode 2 to provide the gap 19 → moving in the (-) X-axis direction by the calculated moving distance → supplying the pulse current → moving in the (+) X-axis direction by the calculated moving distance → raising to the upper limit position →supplying the electrolyte to the gap to remove the residual products →

(3) Lowering the electrode to provide the gap 19 → moving in the (+) Y-axis direction by the calculated moving distance → supplying the pulse current → moving in the (-) Y-axis direction by the calculated moving distance → raising to the upper limit position ...

The pulse current is supplied to the electrode in synchronism with the injection of the electrolyte. Then, the electrode 2 is controlled to change the moving directions to the (-) Y-axis direction and the (+) X-axis direction in sequence.

When the electrode 2 is positioned as shown in Fig. 3c, the surfaces A and B of the work 4 is effectively machined to increase the laster. The machining of the surface C is less than the surface A so that the residual products are laible to stick to the surface. The machining depths of the surfaces D and E are average value of machining depthes of the surfaces A, B and the surface C. When the electrode 2 is on the position shown in Fig. 3d, the surfaces B and C are effectively machined, the surface A is less effective, and the surfaces D and E are in the middle. Consequently, if the electrode 2 is moved in the directions I, II, III and IV shown in Fig. 3a in sequence (1→2→3 ...), each surface of the work is uniformly machined. The moving distance of the electrode 2 from the original positions is calculated in the arithmetic device 23 and stored in the memory 24. Thus, the electrode 2 is controlled to provide the gap 19 between the electrode surface 2a and the work surface 4a not less than 0.05 mm.

It is important that the moving distance relates to the roughness of the electrode surface. If the electrode surface has a roughness of 0.5 mm pitch, the electrode 2 is moved relatively to the work 4 by the pitch smaller than 0.5 mm. Consequently, the same phase problem between roughnesses is solved by the interference between peaks of both roughnesses. Accordingly, it will be seen that if the electrode 2 is moved a distance between 0.1 and 0.3 mm, considering the roughness of the surface, the work can be finished without influence of the rough surface of the electrode. Namely, if the roughness of the surface of the electrode 2 (surface roughness: Rmax and pitch of the roughness) is measured and applied to the arithmetic device 23 through the input device 17, arithmetic device 23 calculates the reciprocating moving distance corresponding to one half of the pitch of the roughness and the machining cycle dependent on the surface roughness, and produces control signals for controlling the motors. Thus, an extremely smooth work surface can be obtained.

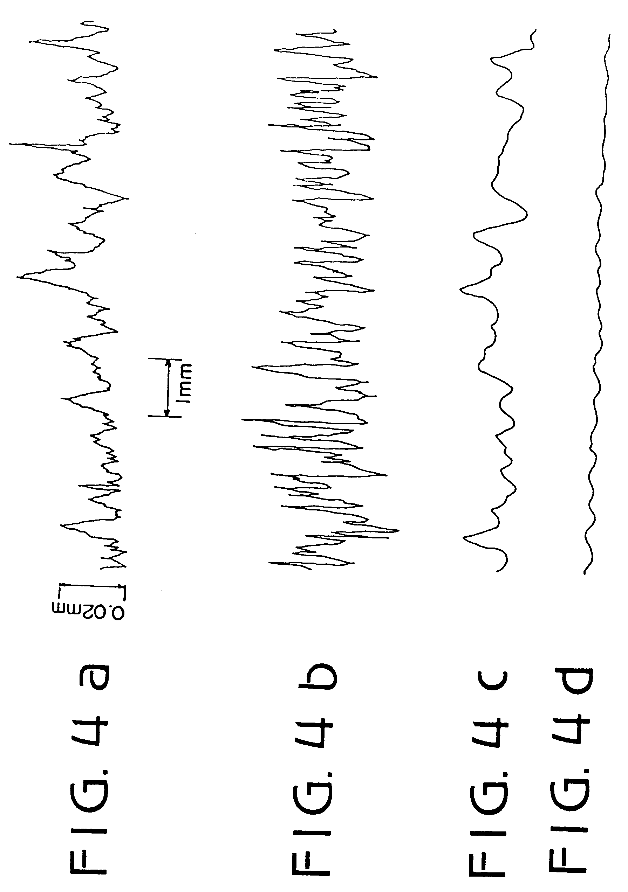

As shown in Fig. 4b, if the work surface obtained by the electron discharge machining (premachining) is Rmax: 60 $\mu$m and the electrode surface is Rmax: 44 $\mu$m as shown in Fig. 4a, the finished surface roughness obtained by a conventional electrolytic machining method is Rmax: 28 $\mu$m as shown in Fig. 4c. However, in the present invention, the finished surface roughness is Rmax: 3 $\mu$m or less as shown in Fig. 4d.

In the present invention, although the detailed description for controlling the current is omitted, the effect does not change with the current. Furthermore, if the moving distance of the electrode is differently controlled in the X-axis direction from in the Y-axis direction, in view of the shape of the work and the direction of the roughness of the electrode surface, an accurate finished surface can be obtained.

PROBABILITY OF INDUSTRIAL EXPLOITATION

The present invention provides the effects as follows.

1. The position of the electrode can be controlled without changing the polarity of the electrode and the work connected to the source. The roughness of the surface of the electrode is not transferred to the work surface. The work having finished surface roughness lower than Rmax: 3 $\mu$m can be obtained irrespective of the surface roughness and the pitch of the roughness of the electrode surface.

2. Therefore, since the electrode having the rough surface can be used, the manufacturing cost of the electrode can be lowered.

3. If the rough surface of the electrode is measured once, the same data is used for subsequent machining so that the workload of the operator is reduced to improve working efficiency.

**Claims**

1. A method for finishing a work by an electrolytic machine comprising: the steps of

    moving an electrode in a vertical direction and in a horizontal plane based on an input set value;

    positioning the electrode to form a predetermined gap between the electrode and the surface of the work;

    supplying electrolyte to an electrolyte tank so as to submerge the electrode and the work;

    applying pulses having a high peak current density to the electrode for performing the electrolytic machining;

    supplying clean electrolyte to the gap and discharging the electrolyte including residual products;

    repeating said machining cycle.

2. The method according to claim 1 wherein after the work surface is machined in the direction on an X-axis, the work surface is machined in the direction on a Y-axis.

EP 0 471 086 A1

# FIG. 1

# FIG. 2

FIG. 3a

FIG. 3b

FIG. 3c

FIG. 3d

FIG. 4 a

0.02mm

1mm

FIG. 4 b

FIG. 4 c

FIG. 4 d

EP 0 471 086 A1

# INTERNATIONAL SEARCH REPORT

International Application No  PCT/JP91/002

**I. CLASSIFICATION OF SUBJECT MATTER** (if several classification symbols apply, indicate all) [6]

According to International Patent Classification (IPC) or to both National Classification and IPC

Int. Cl$^5$  B23H3/00

**II. FIELDS SEARCHED**

| Minimum Documentation Searched [7] | |
|---|---|
| Classification System | Classification Symbols |
| IPC | B23H3/00, 3/02 |

| Documentation Searched other than Minimum Documentation to the Extent that such Documents are Included in the Fields Searched [8] |
|---|
| Jitsuyo Shinan Koho                1926 - 1991 |
| Kokai Jitsuyo Shinan Koho          1971 - 1991 |

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| A | JP, A, 1-252317 (Shizuoka Seiki K.K.), October 9, 1989 (09. 10. 89), (Family: none) | 1-2 |
| A | JP, B2, 61-15958 (Inoue Japax Research Inc.), April 26, 1986 (26. 04. 86), (Family: none) | 1-2 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| May 20, 1991 (20. 05. 91) | June 3, 1991 (03. 06. 91) |
| International Searching Authority | Signature of Authorized Officer |
| Japanese Patent Office | |